Europäisches Patentamt

European Patent Office

Office européen des brevets

(11) Publication number: **0 428 333 A2**

# EUROPEAN PATENT APPLICATION

(21) Application number: **90312220.8**

(22) Date of filing: **08.11.90**

(51) Int. Cl.5: **G03H 1/04**, G03H 1/26, B42D 15/02

(30) Priority: **14.11.89 GB 8925675**
**04.05.90 GB 9010094**

(43) Date of publication of application:
**22.05.91 Bulletin 91/21**

(84) Designated Contracting States:
**BE CH DE FR GB IT LI**

(71) Applicant: **ILFORD Limited**
**Town Lane**
**Mobberley Knutsford Cheshire WA16 7HA(GB)**

(72) Inventor: **Hopwood, Anthony Ian**
**52 Water Street**
**Bollington, Macclesfield SK10 5PB(GB)**

(74) Representative: **Matthews, Richard Nordan**
**Ilford Limited Patents Department Town Lane**
**Mobberley Knutsford Cheshire WA16 7HA(GB)**

(54) **Preparing holograms.**

(57) There is described a method of preparing a hologram having a restricted angle of view on transparent holographic material which comprises as a first stage preparing a reflection master hologram of a uniform planar object, the reflection master being so prepared that it reflects light only in a desired narrow viewing window, and as a second stage imagewise laser exposing light-transparent photosensitive holographic material which is so located in front of the reflection master that the exposing laser light is reflected therefrom back into the holographic material, and then processing the holographic material.

What is achieved is in essence a bright two dimensional hologram which switches on and off rather than a three dimensional holographic image which appears to be suspended in space in front of the holographic material which comprises the interference fringes.

EP 0 428 333 A2

## BACKGROUND OF THE INVENTION

This invention relates to the production of holograms which have a restricted angle of viewing to make them appear bright and to switch on and off abruptly.

Until the present time, to produce such holograms it has been necessary to prepare artwork and from this to prepare a transmission master hologram which has been so exposed that, when reconstructed, it exhibits the desired narrow viewing angle. From the transmission master is prepared a reflection master and this is used to prepare reflection copy holograms. All this is both expensive and time consuming.

Summary of the Invention

The invention is directed to an improved method of preparing copy holograms which have a restricted angle of viewing and which are easier to prepare.

Therefore, according to the present invention there is provided a method of preparing a hologram having a restricted angle of view on transparent holographic material which comprises as a first stage preparing a reflection master hologram of a uniform planar object, the reflection master being so prepared that it reflects light only in a desired narrow viewing window, and as a second stage imagewise laser exposing light-transparent photosensitive holographic material which is so located in front of the reflection master that the exposing laser light is reflected therefrom back into the holographic material, and then processing the holographic material.

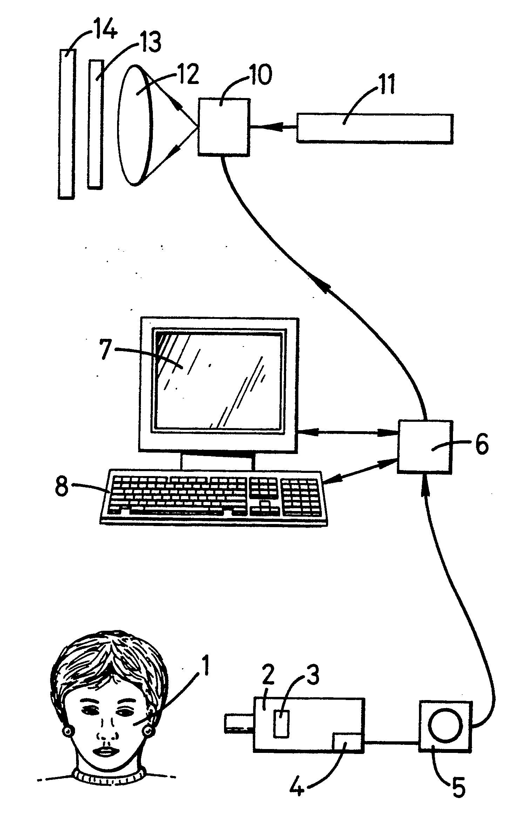

Brief Description of the Drawing

The figure is a flow diagram which incorporates the devices used in practising the method of the present invention according to one embodiment as outlined in Example 2.

Detailed Description of the Invention

It is to be understood that the purpose of the reflection master is not to impart any image information to the hologram but to provide a restricted angle of view when the hologram is reconstructed. The reflection master once prepared can be used over and over again in any method when the restricted angle of view is required in a processed hologram.

There are various ways of imagewise exposing the photosensitive material using a laser to provide the image of the required hologram thereon such as laser scanning and the Denisyuk method of preparing reflection holograms.

In one method, a high-contrast transparency of the required image is prepared the background being black. This is used as a mask. An overall laser scan of such a mask will expose the photosensitive material to produce a positive image on the photosensitive material. For example, if it were required to produce a hologram of the word JONES then a high-contrast photographic negative of the word JONES would be prepared and this would be used as the mask.

In another method a modified computer-to-plate system is used. In this method, the required image is composed on a video display unit connected to a computer. The image is then present in digital form in the computer. This digital information is used to modulate the exposure from a laser beam which scans the photosensitive holographic material imagewise and transfer the VDU displayed image to the photosensitive material. In this case, instead of the laser scanning a printing plate which is now well established technology it scans the photosensitive holographic material, overlaid on the uniform reflection master.

The required image can be composed using computer aided design (CAD) if all the required elements of the design can be formed using the keyboard of the computer.

However, if it is required to prepare a complicated image such as a human face a video camera can be used to prepare and store a digital image of the face. This image can be fed into a computer and viewed on the VDU. The contrast of the image and its size can then be adjusted and alphanumeric symbols added. This information as it is in digital form can be used to control a laser using, for example, an acousto-optic scanning system.

The uniform planar object used to produce the reflection master may be a matt surface. Preferably it is completely planar without any surface disconformities. Preferred surfaces are a brushed aluminium plate and a diffuse white reflecting surface.

Preferably the viewing angle is not more than 20° about any two non-parallel axes in the plane of the hologram. In the case of a hologram displayed on a vertical plane, this means that the image can only be viewed from a range of positions restricted in the horizontal and/or vertical planes. Outside this range the hologram appears to carry no image.

More than one viewing window may be incorporated into the hologram by exposing the holographic material in two separate operations to different imagewise exposures. The two images may be superimposed and by changing the reflection master for one with a different viewing window the images may be arranged to switch on at different viewing positions. A company logo can be made to appear when the image is viewed from one position, and a signature, a serial number or an encoded security message when viewed from a second position. Therefore according to this aspect of the present invention there is provided a method of preparing a hologram having two restricted angles of view on a single sheet of holographic material which comprises as a first stage preparing two reflection masters of a uniform planar object so that each reflects light into a different viewing window, and as a second stage imagewise exposing light-transparent photosensitive material which is located in front of each reflection master in turn and which is the same size and shape as the reflection masters and which is so located in front of the reflection master that the exposing laser light is reflected back into the holographic material.

It is sometimes required that instead of a single reflection hologram being prepared a plurality of holograms of the same object are required on a sheet or strip of holographic material. This strip may be divided as required to produce portions of the strip which exhibit one or more of the reflection holograms.

Therefore according to this aspect of the present invention there is provided a method of preparing a series of holograms having a restricted angle of view on transparent holographic material which comprises as a first stage preparing a reflection master hologram of a uniform planar object, the reflection master being so prepared that it reflects light only onto a viewing window identical in size and shape and orientation to the planar object, and as a second stage imagewise laser exposing an area of light transparent photosensitive holographic material which is the same size and shape as the reflection master and which is so located in front of the reflection master that the exposing laser light is reflected therefrom back into the holographic material and making subsequent exposures wherein the area of photosensitive material being exposed butts on to previously exposed areas. During the subsequent exposures preferably the web is moved to enable unexposed material to be exposed.

The uniform planar object may be cut to produce the desired size or the reflection master may be masked to produce the desired reflecting area.

The holograms prepared by the method of the present invention appear very bright even when viewed by non-specific lighting. Preferably, the hologram produced on exposure and processing of the photosensitive holographic material is a Lippman Bragg reflection hologram.

By Lippman Bragg reflection hologram is meant a hologram in which the interference fringes are substantially perpendicular to the light rays used to reconstruct the image and this usually means that the fringes are substantially parallel to the plane of the base on which the photosensitive layer is coated. Such holograms are also known as volume holograms as the fringes which provide on reconstruction the holographic image are in the depth of the photosensitive layer rather than on the surface as is the case with embossed holograms.

A particularly useful Lippman Bragg hologram for use in the present invention can be prepared from silver halide photosensitive materials the size of the silver halide crystals used being from about 0.02 to 0.05 µm average mean size.

Other photosensitive layers from which Lippman Bragg holograms may be prepared are dichromated gelatin and photopolymers. Yet another type may be a photopolymerisation mixture which is present in the hydrophilic water-swellable layer. After holographic exposure and aqueous processing a hologram is formed in the layer. However, holograms produced using these materials tend to exhibit high haze and sensitivity to humidity thus requiring special protection.

US patent specification No. 4173474 describes a method for forming a hologram using a photopolymerisation mixture. Another such system is described in WO 85/01127.

In the holographic material used in the present invention the supporting base may be any transparent base used in the photographic industry, for example, biaxially oriented polyethylene terephthalate or polycarbonate or a cellulose derivative such as cellulose triacetate.

The required angle of view in the final copy hologram is obtained by using a uniform reflection master hologram which exhibits the desired angle of view. The areas are selected image wise from the uniform reflection master by modulating and/or deflecting the laser beam used to expose the final copy hologram. The required angle of view of the reflection master hologram is created by controlling the size and position of the transmission master hologram relative to the uniform planar object at exposure, then processing the transmission master hologram. Thus the angle of view for each axis is simply the length of the transmission master in that direction divided by the distance of the transmission master from the uniform planar object. For example a transmission master having a side length of 100 mm separated from the uniform planar object by 500 mm has an angle of view on that axis given by twice the arctan of 50mm/500mm that is to say 11.42 degrees. The transmission master hologram is then used to make the reflection master hologram ensuring that the image of the uniform planar object is coplanar with the reflection master hologram at exposure. The reflection master hologram is then processed to fix the holographic images in such a way that it replays at its most efficient at the angle of incidence and wavelength of the laser to be used to make the imagewise final copy.

This is the reflection master which is used during the exposure of the photosensitive holographic material in the method of the present invention. Reflection holograms present in the holographic material prepared according to the present invention will only be visible on reconstruction through the solid angle defined by the position of the transmission master during the exposure of the holographic material to produce the reflection master

Thus what is achieved is in essence a bright two dimensional hologram which switches on and off rather than a three dimensional holographic image which appears to be suspended in space in front of the holographic material which comprises the interference fringes.

Preferably the photosensitive holographic material using both for the preparation of the reflection master and for the final hologram is silver halide holographic material. Processing after laser exposure comprises silver halide development followed by a rehalogenating bleach bath.

Any commonly used black and white silver halide developing solution may be used to develop the exposed holographic material. The rehalogenating bleach bath used comprises a silver bleaching agent such as ferric ammonium E.D.T.A. or a soluble dichromate and a water-soluble halide, preferably a bromide. The object of the rehalogenating bleach is to convert developed silver back to silver halide. The bleaching of holograms is described in The Journal of Photographic Science, Vol 31, 1983, pages 143 - 147.

The photosensitive layer may have been coated on the base by any of the conventional techniques well known to the photographic industry such as by use of a doctor bar, or by slot, cascade curtain or dip methods. The coated layer may then be dried by normal hot air methods. When the material is a dichromated gelatin hologram (DCG hologram) the coated gelatin layer is sensitised with a dichromate solution just before it is holographically exposed.

In the examples which follow the photosensitive holographic material used is silver halide material.

## EXAMPLE 1

### A) Preparation of a reflection master

Samples of holographic material were prepared by coating onto a transparent photographic film base a gelatino silver halide emulsion which was substantially pure silver bromide having a mean crystal size of 0.03 $\mu$m at a silver coating weight of 30 mg/dm$^2$. The emulsion was optically sensitised with a red sensitising dye so that it was optimally sensitive to 633 nm the colour of a He:Ne laser.

One sample of this material was exposed for 1 second using a He: Ne laser to make a transmission master hologram, the object of which was a brushed aluminium plate, the distance from the object to photographic material being 12 inches. The reference angle used was Brewster's angle.

The transmission master was processed (as discussed below), dried and then copied into a fresh light-sensitive film to make a reflection master hologram. The fresh film was positioned carefully in space approximately 12 inches from the transmission master in such a way as to ensure that the film and the image of the aluminium plate were on parallel planes. The area of the transmission master illuminated to replay the image controls the angle of view of the final laser-written copy holograms. For this example a 3 inch square patch of the transmission master was illuminated which yielded a hologram having a total viewing angle of 14.4$^\circ$.

The exposed materials were developed for 2 minutes in the solution of the following formulation:-

| Sodium Sulphite Anhydrous | 30g |
| Hydroquinone | 10g |
| Sodium Carbonate | 60g |
| Water to | 100ml |

The developed samples were then transferred to a rehalogenating bleach bath of the following composition.

| Fe (NH$_4$) EDTA (1.8m) Solution) | 150 mls |
| KBR | 10 g |
| pH | 5.5 |
| Water to | 1000 mls |

until all the silver metal had been bleached out which was about 2 minutes.

After washing and drying the reflection master was examined and found to reflect light over only 7° on either side of normal. The master replayed brightly with the laser set to the designed replay angle.

B) A 2 dimensional object was then prepared by using performed letters to form the name 'JONES'. These letters were stuck on a transparent sheet of film. This sheet of film was contact exposed to a sheet of silver halide film and the image developed in a black and white developing solution to maximum density and then fixed and washed. A negative working image of 'JONES' was thus obtained.

C) A sandwich was then formed using at the top the negative masking image just obtained, followed by a sheet of silver halide photosensitive material as used to prepare the reflection master. A He:Ne laser was then used to expose for 1 second this sandwich through the mask at the top.

The photosensitive material was then processed as just described and washed and dried. The hologram present in the material was then re-examined and a rich gold hologram of the word 'JONES' was present on the transparent film base. This hologram had a viewing angle of 7° on either side of the normal and substantially no depth.

EXAMPLE 2

The same photosensitive material is used as in Example 1 and the reflection master as prepared in Example 1 is used.

In this case, the hologram is to be a human face. A video camera is employed to capture the image of the face. The video signals representative of the image are obtained and digitised and then stored in a computer. These stored signals are fed to a visual display unit and a reconstruction of the face is then displayed. This image can then be altered to increase the contrast and cut out any unrequired features.

This digital stored image is then used to activate an acousto-optic modulation and deflection system to control a laser beam so that the laser beam scans over the photosensitive material in contact with the reflection master. After processing as just described, washing and drying a two dimensional image of the human face is observed on the holographic material.

The accompanying drawing will serve to illustrate the invention. The drawing is flow diagram which incorporates the devices used in the method as just outlined.

The devices comprise a video camera 2 which incorporates a charge coupled device (CCD) 3 and an analogue to digital converter 4. A disc storage means 5 which is connected to a computer which comprises in this drawing a numerical algorithm 6, a television screen (VDU) 7 and a keyboard 8. The exposure section comprises an acousto-optic modulator and deflector 10, a He:Ne laser 11, a lens 12 which converts the angular deflection from 10 into a positional deflection at a constant angle, a sheet of silver halide sensitised holographic material 13 and a reflection master 14 as prepared in Example 1.

In operation an image of a face 1 is captured by the video camera 2. This image is recorded in the CCD 3 and passed via the analogue/digital convertor 4 to the disc storage means 5. The stored signals are then fed via the numerical algorithm 6 to the VDU 7 on which the stored image of the face is displayed. This image is then adjusted using the keyboard 8 and an alphanumeric designation which identifies the face

5

is added below the face on the VDU 7.

The image on the VDU is then passed via the numerical algorithm 6 to an a acousto-optic beam deflection system 10 which modulates and deflects a laser beam causing it to scan the material 13. The laser 11 thus imagewise exposes the photosensitive material 13, the laser beam being reflected back into the material 13 from the reflection master 14. The material is then processed as described in Example 1. When the hologram in the mathrial 13 is reconstructed it is found to exhibit a bright sharp hologram of the face 1 and the added alphanumeric designation. The viewing angle is $7^{\circ}$ either side of the normal. Outside this range the image switches off.

### EXAMPLE 3

One sample of the material as prepared in example 1 was laser exposed to make a transmission master hologram, which was 4 x 4 inches, the object of which was brushed aluminium plate, the distance from the object to photographic material being 12 inches. The reference angle used was Brewster's angle.

The transmission master was processed (as discussed below), dried and then copied into a fresh light-sensitive film to make a reflection master hologram. A 4 x 4 inch piece of fresh film was positioned carefully in place approximately 12 inches from the transmission master in such a way as to ensure that the film and the image of the aluminium plate were isometric. The area of transmission master illuminated to replay the image controls the angle of view of the final laser-written copy holograms. For this example, a 4 x 4 inch square patch of the transmission master was illuminated which corresponds to a total viewing angle of $19.1^{\circ}$.

The exposed material was developed for 2 minutes in the solution used in Example 1.

The developed sample was then transferred to the same bleach bath used in Example 1., until all the silver metal had been bleached out which was about 2 minutes.

After washing and drying the reflection master was examined and found to reflect light over only $8.5^{\circ}$ on either side of the normal. The master replayed brightly with the laser set to the replay angle of the hologram.

A 2 dimensional object was then prepared by using preformed letters to form the name 'JONES' repeatedly on a piece of transparent film 4 x 4 inches using stick-on letters. The word 'JONES' was so set-out on the film that it formed a repeating pattern both horizontally and vertically so that if two or more such films was butted together the pattern would repeat every 4 inches.

A sandwich was then formed using at the top the negative masking image of the word 'JONES', as just obtained, followed by a web 4 inches wide of photosensitive material as hereinbefore prepared in Example 1, and at the bottom the reflection master as just prepared. A He:Ne laser was then used to expose this sandwich through the mask at the top.

The web was then moved 4 inches along and the exposure repeated. This procedure was continued until all the web had been exposed.

The photosensitive material was then processed as just described and washed and dried. A plurality of the word 'JONES', each forming a rich gold hologram, was present over the length of the web. Each hologram had a viewing angle of $8.5^{\circ}$ on dither side of the normal but it was not possible to distinguish each individually exposed area.

## Claims

1. A method of preparing a hologram having a restricted angle of view on transparent holographic material which is characterised in that it comprises as a first stage preparing a reflection master hologram of a uniform planar object, the reflection master being so prepared that it reflects light only in a desired narrow viewing window, and as second stage imagewise laser exposing light-transparent photosensitive holographic material which is so located in front of the reflection master that the exposing laser light is reflected therefrom back into the holographic material, and then processing the holographic material.

2. A method according to Claim 1 characterised in that the hologram produced on exposure and processing of the photosensitive holographic material is a Lippman Bragg reflection hologram.

3. A method according to Claim 2 characterised in that the photosensitive holographic material is silver halide sensitised.

4. A method according to Claim 1 characterised in that the holographic material is imagewise laser exposed by an overall laser exposure using a negative mask of the required hologram.

5. A method according to Claim 1 characterised in that the laser is connected to a beam deflection system which modulates and deflects the laser to cause it to scan the photosensitive material in an imagewise manner.

6. A method according to Claim 5 characterised in that an acousto-optic system is used to modulate and deflect the laser beam.

7. A method according to Claim 1 characterised in that the copy hologram is exposed more than once to one or more uniform reflection masters, having similar or different viewing angles, using similar or different imagewise exposures so that the copy hologram contains two or more images each with different optical properties.

8. A method of preparing a series of holograms having a restricted angle of view on transparent holographic material which is characterised in that it comprises as a first stage preparing a reflection master hologram of a uniform planar object, the reflection master being so prepared that it reflects laser light only into a viewing window identical in size and shape and orientation to the planar object, and as a second stage image-wise laser exposing an area of light transparent photosensitive holographic material which is the same size and shape as the reflection master and which is so located in front of the reflection master that the exposing laser light is reflected therefrom back into the holographic material and making subsequent exposures wherein the area of photosensitive material being exposed butts on to the previously exposed areas.

9. A method of preparing a hologram having two restricted angles of view on a single sheet of holographic material which is characterised in that it comprises as a first stage preparing two reflection masters of a uniform planar object so that each reflects light into a different viewing window, and as a second stage imagewise exposing light-transparent photosensitive material which is located in front of each reflection master 'in turn and which is the same size and shape as the reflection masters and which is so located in front of the reflection masters that the exposing laser light is reflected back into the holographic material and then processing the photographic material.